# EUROPÄISCHE PATENTSCHRIFT

(11) **EP 3 786 437 B1**
(45) Veröffentlichungstag und Bekanntmachung des Hinweises auf die Patenterteilung: **13.03.2024**
(21) Anmeldenummer: 20189979.6
(22) Anmeldetag: 07.08.2020
(51) Int. Cl.: F02F 3/10, F02F 1/00

(54) **KOLBEN UND ZYLINDER EINER BRENNKRAFTMASCHINE UND BRENNKRAFTMASCHINE**
COMBUSTION ENGINE AND PISTON AND CYLINDER OF A COMBUSTION ENGINE
PISTON ET CYLINDRE D'UN MOTEUR À COMBUSTION INTERNE ET MOTEUR À COMBUSTION INTERNE

(30) Priorität: 27.08.2019 DE 102019122878
(43) Veröffentlichungstag der Anmeldung: 03.03.2021
(73) Patentinhaber: MAN Energy Solutions SE, 86153 Augsburg (DE)
(72) Erfinder: Shaer, Talat, 86153 Augsburg (DE)

(56) Entgegenhaltungen:
- WO-A1-2013/158107
- DE-A1- 4 310 491
- DE-A1- 4 312 804
- DE-A1- 19 734 053
- US-A- 5 469 777

## Beschreibung

Die Erfindung betrifft einen Kolben eines Zylinders einer Brennkraftmaschine, einen Zylinder einer Brennkraftmaschine und eine Brennkraftmaschine.

Aus der DE 10 2013 009 415 A1 ist ein Kolben eines Zylinders einer Brennkraftmaschine bekannt, der in einer Zylinderlaufbuchse auf und ab bewegbar geführt ist. In einer Ausnehmung der Zylinderlaufbuchse ist ein Flammring positioniert. In eine radial äußere Fläche des Kolbens sind Nuten eingebracht, die Kolbenringe aufnehmen. Zwischen einem vorderen oder oberen Kolbenboden des Kolbens und der obersten oder vordersten Nut des Kolbens bildet die radial äußere Fläche des Kolbens einen sogenannten Feuersteg aus, wobei der Flammring der Zylinderlaufbuchse unter anderem dazu dient, von der radial äußeren Fläche des Kolbens, insbesondere im Bereich des Feuerstegs, Ablagerungen abzustreifen.

Zwischen der radial äußeren Fläche des Kolbens, nämlich dem Feuersteg, und dem Flammring ist ein Spiel erforderlich, um ein ungestörtes Bewegen des Kolbens in der Zylinderlaufbuchse zu ermöglichen. In diesem Spiel zwischen Kolben und Flammring bildet sich ein sogenanntes Schadvolumen aus, in welchem sich ein Kraftstoffgemisch sammeln kann, welches nur uneffektiv an der Verbrennung teilnimmt. Zur Reduzierung des Schadvolumens und damit zur Erhöhung des Motorwirkungsgrads wird nach dem Stand der Technik das Spiel zwischen dem Kolben und dem Flammring so klein wie möglich gewählt. Dies erfordert hohe Fertigungstoleranzen.

Aus der DE 10 2013 009 415 A1 ist es bekannt, zur Verringerung des Schadvolumens den Kolbenboden am radial äußeren Rand nach axial hinten zu ziehen. Aus der US 5 469 777 ist es bekannt, zur Verringung des Schadevolumens den Feuersteg mit einer nicht abriebfesten Beschichtung zu beschichten.

Hiervon ausgehend liegt der vorliegenden Erfindung die Aufgabe zugrunde, einen neuartigen Kolben eines Zylinders einer Brennkraftmaschine, einen Zylinder einer Brennkraftmaschine und eine Brennkraftmaschine zu schaffen.

Diese Aufgabe wird durch einen Kolben nach Anspruch 1 gelöst. Erfindungsgemäß trägt der Feuersteg des Kolbens eine nicht abriebfeste Beschichtung.

Mit der hier vorliegenden Erfindung wird vorgeschlagen, dass der Kolben im Bereich des Feuerstegs eine weiche, nicht abriebfeste Beschichtung aufweist bzw. trägt. Bei einem sich im Motorbetrieb ausbildenden lokalen Kontakt des Feuerstegs des Kolbens mit dem Flammring kann die Beschichtung lokal abgetragen werden, um das betriebsnotwendige Spiel zwischen Kolben und Flammring exakt einzustellen, und zwar ohne Forderung von hohen Fertigungstoleranzen. Durch die nicht abriebfeste Beschichtung kann das Schadvolumen zwischen Kolben und Flammring minimiert und der Motorwirkungsgrad erhöht werden.

Vorzugsweise besteht die nicht abriebfeste Beschichtung aus harzgebundenem Graphit. Eine derartige Beschichtung ist besonders bevorzugt, um im Motorbetrieb das betriebsnotwendige Spiel zwischen Kolben und Flammring durch lokalen Abrieb der Beschichtung einzustellen.

Nach einer Weiterbildung der Erfindung weist die nicht abriebfeste Beschichtung eine Dicke zwischen 0,02 mm und 0,2 mm, vorzugsweise zwischen 0,05 mm und 0,15 mm, auf. Diese Dicke der nicht abriebfesten Beschichtung ist besonders bevorzugt, um im Motorbetrieb das betriebsnotwendige Spiel zwischen Kolben und Flammring einzustellen.

Der erfindungsgemäße Zylinder ist in Anspruch 10 und die erfindungsgemäße Brennkraftmaschine ist in Anspruch 11 definiert.

Bevorzugte Weiterbildungen der Erfindung ergeben sich aus den Unteransprüchen und der nachfolgenden Beschreibung. Ausführungsbeispiele der Erfindung werden, ohne hierauf beschränkt zu sein, an Hand der Zeichnung näher erläutert. Dabei zeigt:
- Fig. 1: einen ausschnittweisen Querschnitt durch einen nicht erfindungs-gemäßen Zylinder einer Brennkraftmaschine,

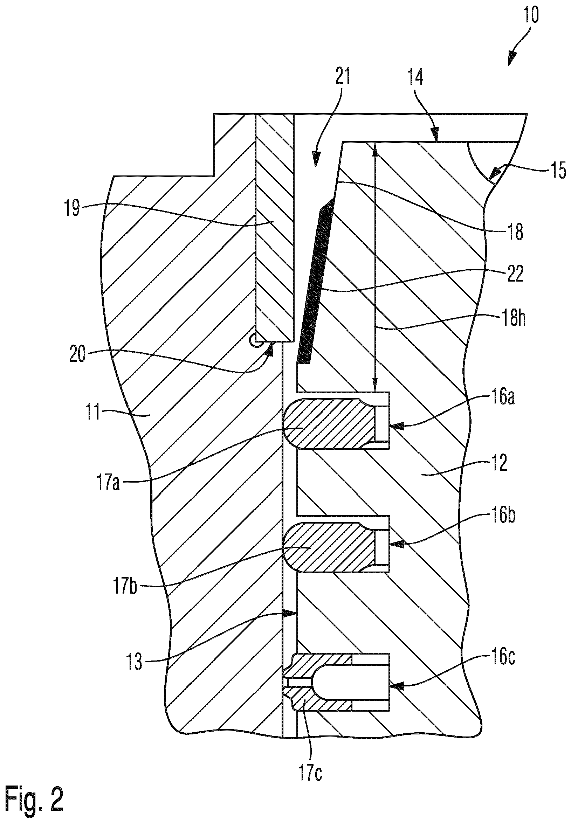

- Fig. 2: einen ausschnittweisen Querschnitt durch einen zweiten erfindungs-gemäßen Zylinder einer erfindungsgemäßen Brennkraftmaschine.

Die Erfindung betrifft eine Brennkraftmaschine. Eine Brennkraftmaschine verfügt über mindestens einen Zylinder.

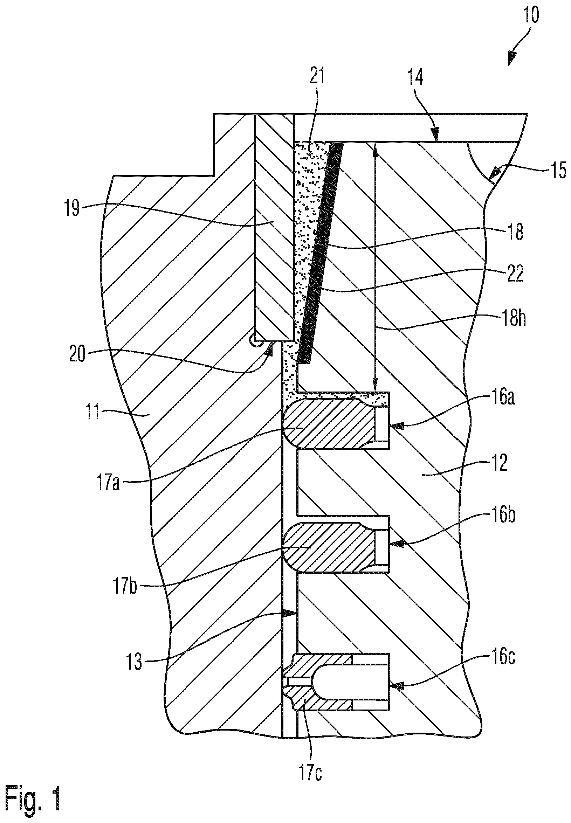

Fig. 1 zeigt einen Ausschnitt aus einem Zylinder 10 einer Brennkraftmaschine im Bereich einer Zylinderlaufbuchse 11 sowie eines in der Zylinderlaufbuchse 11 auf und ab bewegbar geführten Kolbens 12. Der Kolben 12 verfügt über eine radial äußere Fläche 13 sowie über einen vorderen bzw. oberen Kolbenboden 14. In dem Kolbenboden 14 kann mittig eine Mulde 15 eingebracht sein. Der Kolben 12 weist an seiner radial äußeren Fläche 13 Nuten 16a, 16b und 16c auf. In diese Nuten 16a, 16b und 16c des Kolbens 12 sind Kolbenringe 17a, 17b, 17c eingesetzt. Die beiden oberen Kolbenringe 17a, 17b werden als Verdichtungsringe und der untere Kolbenring 17c als Ölabstreifring bezeichnet.

Derjenige Abschnitt des Kolbens 12, der sich zwischen dem Kolbenboden 14 und der obersten bzw. vordersten Nut 16a des Kolbens 12 erstreckt, wird als Feuersteg 18 bezeichnet. Der Abstand zwischen der obersten bzw. vordersten Nut 16a des Kolbens 12 und dem Kolbenboden 14c wird als Feuersteghöhe 18h des Feuerstegs 18 bezeichnet.

Die Zylinderlaufbuchse 11 nimmt einen Flammring 19 auf. Der Flammring 19 ist in eine Ausnehmung 20 der Zylinderlaufbuchse 11 eingesetzt. Im Betrieb kann der Kolben 12 im Bereich seines Feuerstegs 18 mithilfe des Flammrings 19 gereinigt werden. Insbesondere dient der Flammring 19 dem Abstreifen von Ablagerungen, wie zum Beispiel von Koks von der radial äußeren Fläche 13 des Kolbens 12 im Bereich des Feuerstegs 18 und damit im Bereich der Feuersteghöhe 18h.

Im in Fig. 1 gezeigten nicht erfindungsgemäßen Beispiel verringert sich ein Außendurchmesser der radial äußeren Fläche 13 im Bereich des Feuerstegs 18 von der vordersten bzw. obersten Nut 16a aus gesehen in Richtung auf den Kolbenboden 14 zumindest abschnittsweise konisch. Zwischen dem Feuersteg 18 und dem Flammring 19 ist ein Freiraum 21 ausgebildet, welcher das Spiel zwischen dem Flammring 19 und dem Feuersteg 18 des Kolbens 12 bestimmt. In diesem Freiraum 21 kann sich im Motorbetrieb Kraftstoff sammeln, der nur uneffizient verbrannt wird. Daher wird dieser Freiraum 21 auch als Schadvolumen bezeichnet.

Um auch bei geringen Fertigungstoleranzen das Schadvolumen 21 so gering wie möglich zu halten und den Wirkungsgrad einer Brennkraftmaschine zu erhöhen, trägt der Feuersteg 18 radial außen eine nicht abriebfeste Beschichtung 22.

Diese relativ weiche, nicht abriebfeste Beschichtung 22 kann bei einem lokalen Kontakt zwischen dem Feuersteg 18 und dem Flammring 19 lokal abgetragen werden, um so das betriebsnotwendige Spiel zwischen dem Feuersteg 18 des Kolbens 12 und dem Flammring 19 im Motorbetrieb auf ein Minimum einzustellen. Hierdurch erhöht sich der Wirkungsgrad des Motors.

Bei der nicht abriebfesten Beschichtung 22 handelt es sich vorzugsweise um eine Beschichtung aus harzgebundenem Graphit.

Beim Kolben 12 handelt es sich vorzugsweise um einen aus einem nicht gezeigten Kolbenunterteil und einem Kolbenoberteil zusammengesetzten Kolben, wobei Kolbenunterteil und Kolbenoberteil beide aus Stahl oder aus Eisenguss, insbesondere aus Sphäroguss, bestehen können. Auch kann Leichtmetall genutzt werden.

Die nicht abriebfeste Beschichtung 22 besteht aus einem weicheren Werkstoff als der Werkstoff des Kolbenunterteils und des Kolbenoberteils. Ferner besteht die nicht abriebfeste Beschichtung 22 aus einem weicheren Werkstoff als der Flammring 19 und die Zylinderlaufbuchse 11.

Weitere Eigenschaften der nicht abriebfeste Beschichtung 22 sind eine Temperaturbeständigkeit bis 250 °C, eine Resistenz gegen Angriffe von Kraftstoff und Schmieröl, sowie eine gute Haftung/Bindung. Die Härte der Beschichtung 22 bewegt sich bevorzugt in einem Härtebereich von 10-50HB (Brinell). Verschiedene Werkstoffe wie z.Bsp. harzgebundenes Graphit oder warmfeste/wärmebeständige Kunststoffe erfüllen diese Eigenschaften.

Die nicht abriebfeste Beschichtung 11 aus vorzugsweise harzgebundenem Graphit weist vorzugsweise eine Dicke zwischen 0,02 mm und 0,2 mm, bevorzugt zwischen 0,05 mm und 0,15 mm auf.

Im nicht erfindungsgemäßen Beispiel der Fig. 1 ist die nicht abriebfeste Beschichtung 22 auf denjenigen Bereich des Feuerstegs 18 aufgebracht, der sich ausgehend von der obersten bzw. vordersten Nut 16a in Richtung auf den Kolbenboden 14 konisch verjüngt. Dabei ist die Beschichtung 22 auf diesen Bereich über dessen gesamte axiale Erstreckung bzw. über dessen gesamte axiale Länge aufgebracht. Die Beschichtung 18 endet demnach in Fig. 1 im Bereich des Kolbenbodens 14.

Demgegenüber zeigt Fig. die Erfindung, in welcher die nicht abriebfeste Beschichtung 22 kürzer ausgebildet ist und mit Abstand vor dem Kolbenboden 14 endet.

Vorzugsweise handelt es sich bei dem erfindungsgemäßen Kolben 12 um einen ölgekühlten Kolben

Die Erfindung betrifft nicht nur den Kolben 12 als solchen, sondern vielmehr auch einen Zylinder 10 mit einer Zylinderlaufbuchse 11 und einem erfindungsgemäßen Kolben 12 sowie eine Brennkraftmaschine mit mindestens einem, vorzugsweise mehreren, solchen Zylindern 10.

Mit der Erfindung ist es möglich, den Motorwirkungsgrad zu verbessern, und zwar durch Reduzierung des Schadvolumens 21 zwischen Flammring 19 und Feuersteg 18.

Die Erfindung kann sowohl bei Dieselbrennkraftmaschinen als auch bei Otto-Gasmotoren als auch bei Dual-Fuel-Motoren zum Einsatz kommen und zwar sowohl bei 2-Takt als auch bei 4-Takt Brennkraftmaschinen. Die Erfindung kommt insbesondere bei Kolben von Großmotoren wie Dieselmotoren oder Gasmotoren oder Diesel-Gas-Motoren im Schiffsbereich zum Einsatz, deren Außendurchmesser insbesondere im Bereich zwischen 100 mm und 600 mm liegt.

### Bezugszeichenliste

- 10: Zylinder
- 11: Zylinderlaufbuchse
- 12: Kolben
- 13: Fläche
- 14: Kolbenboden
- 15: Mulde
- 16a: Nut
- 16b: Nut
- 16c: Nut
- 17a: Kolbenring
- 17b: Kolbenring
- 17c: Kolbenring
- 18: Feuersteg
- 18h: Feuersteghöhe
- 19: Flammring
- 20: Ausnehmung
- 21: Freiraum / Schadvolumen
- 22: Beschichtung

## Patentansprüche

1. Kolben (12) eines Zylinders (10) einer Brennkraftmaschine,
mit einem oberen oder vorderen Kolbenboden (14) und mit einer radial äußeren Fläche (13),
wobei an der radial äußeren Fläche (13) Nuten (16a, 16b, 16c) ausgebildet sind, in welchen Kolbenringe (17a, 17b, 17c) positioniert sind,
wobei zwischen dem Kolbenboden (14) und der obersten oder vordersten Nut (16a) des Kolbens (12) die radial äußere Fläche (13) einen Feuersteg (18) ausbildet,
wobei der Feuersteg (18) eine nicht abriebfeste Beschichtung (22) trägt
**dadurch gekennzeichnet, dass**
sich die nicht abriebfeste Beschichtung (22) über einen Teilbereich der axiaten Länge des Feuerstegs (18) erstreckt und
sich die nicht abriebfeste Beschichtung (22) von einem vom Kolbenboden (14) abgewandten Ende des Feuerstegs (18) aus gesehen in Richtung auf den Kolbenboden (14) über einen Teilbereich der axiale Länge des Feuerstegs (18) erstreckt und mit Abstand vom Kolbenboden (14) endet.

2. Kolben nach Anspruch 1, **dadurch gekennzeichnet, dass** die nicht abriebfeste Beschichtung (22) aus harzgebundenem Graphit besteht.

3. Kolben nach Anspruch 1 oder 2, **dadurch gekennzeichnet, dass** die nicht abriebfeste Beschichtung (22) eine Dicke zwischen 0,02 mm und 0,2 mm aufweist.

4. Kolben nach Anspruch 3, **dadurch gekennzeichnet, dass** die nicht abriebfeste Beschichtung (22) eine Dicke zwischen 0,05 mm und 0,15 mm aufweist.

5. Kolben nach einem der Ansprüche 1 bis 4, **dadurch gekennzeichnet, dass** sich die nicht abriebfeste Beschichtung (22) über die gesamte axialen Länge des Feuerstegs (18) erstreckt.

6. Kolben nach einem der Ansprüche 1 bis 5, **dadurch gekennzeichnet, dass** der Kolben ein Kolbenunterteil und ein mit dem Kolbenunterteil verbundenes Kolbenoberteil aufweist, wobei der Feuersteg (18) am Kolbenoberteil ausgebildet ist, das aus Stahl oder Gusseisen, insbesondere Sphäroguss, besteht.

7. Kolben nach einem der Ansprüche 1 bis 6, **dadurch gekennzeichnet, dass** derselbe ölgekühlt ist.

8. Zylinder (10) einer Brennkraftmaschine,
mit einer Zylinderlaufbuchse (11), wobei eine Ausnehmung (20) der Zylinderlaufbuchse (11) einen Flammring (19) aufnimmt
mit einem in der Zylinderlaufbuchse (11) auf- und ab bewegbar geführten Kolben (12), **dadurch gekennzeichnet, dass**
der Kolben (12) nach einem der Ansprüche 1 bis 7 ausgebildet ist.

9. Brennkraftmaschine, mit mindestens einem Zylinder (10) nach Anspruch 8.

## Claims

1. A piston (12) of a cylinder (10) of an internal combustion engine,
having an upper or front piston crown (14) and having a radially outer surface (13),
wherein on the radially outer surface (13) grooves (16a, 16b, 16c) are formed, in which piston rings (17a, 17b, 17c) are positioned,
wherein between the piston crown (14) and the uppermost or front-most groove (16a) of the piston (12) the radially outer surface (13) forms a fire land (18),
wherein the fire land (18) carries a non-abrasion-resistant coating (22),
**characterised in that**
the non-abrasion-resistant coating (22) extends over a part region of the axial length of the fire land (18), and
the non-abrasion-resistant coating (22), seen from an end of the fire land (18) facing away from the piston crown (14), extends in the direction of the piston crown (14) over a part region of the axial length of the fire land (18) and ends at a distance from the piston crown (14) .

2. The piston according to Claim 1, **characterised in that** the non-abrasion-resistant coating (22) consists of resin-bound graphite.

3. The piston according to Claim 1 or 2, **characterised in that** the non-abrasion-resistant coating (22) has a thickness between 0.02 mm and 0.2 mm.

4. The piston according to Claim 3, **characterised in that** the non-abrasion-resistant coating (22) has a thickness between 0.05 mm and 0.15 mm.

5. The piston according to any one of the Claims 1 to 4, **characterised in that** the non-abrasion-resistant coating (22) extends over the entire axial length of the fire land (18).

6. The piston according to any one of the Claims 1 to 5, **characterised in that** the piston comprises a piston lower part and a piston upper part connected to the piston lower part, wherein the fire land (18) is formed on the piston upper part, which consists of steel or cast iron, in particular spheroidal cast iron.

7. The piston according to any one of the Claims 1 to 6, **characterised in that** the same is oil-cooled.

8. A cylinder (10) of an internal combustion engine,
having a cylinder liner (11), wherein a recess (20 of the cylinder liner (11) receives a flame ring (19),
having a piston (12) that is moveably guided up and down in the cylinder liner (11),
**characterised in that**
the piston (12) is formed according to any one of the Claims 1 to 7.

9. An internal combustion engine having at least one cylinder (10) according to Claim 8.

## Revendications

1. Piston (12) d'un cylindre (10) d'un moteur à combustion interne,
comportant une couronne de piston supérieure ou avant (14) et comportant une surface extérieure (13),
dans lequel sur la surface radialement extérieure (13) sont formées des rainures (16a, 16b, 16c) dans lesquelles sont positionnés des segments de piston (17a, 17 à 17c),
dans lequel entre la couronne de piston (14) et la rainure supérieure ou avant (16a) du piston (12), la surface radialement extérieure (13) forme un cordon de feu (18),
dans lequel la zone supérieure (18) porte un revêtement non résistant à l'abrasion (22),
**caractérisé en ce que**
le revêtement non résistant à l'abrasion (22) s'étend sur une partie de la longueur axiale de la zone supérieure (18) et
le revêtement non résistant à l'abrasion (22) se détache d'une des têtes de piston (14) orienté à l'opposé de l'extrémité de la zone supérieure (18) en direction de la couronne de piston (14) s'étend sur une partie de la longueur axiale de la zone supérieure (18) et se termine à une certaine distance de la couronne de piston (14).

2. Piston selon la revendication 1, **caractérisé en ce que** le revêtement non résistant à l'abrasion (22) est constitué de graphite lié à une résine.

3. Piston selon la revendication 1 ou 2, **caractérisé en ce que** le revêtement non résistant à l'abrasion (22) présente une épaisseur comprise entre 0,02 mm et 0,2 mm.

4. Piston selon la revendication 3, **caractérisé en ce que** le revêtement non résistant à l'abrasion (22) présente une épaisseur comprise entre 0,05 mm et 0,15 mm.

5. Piston selon une des revendications 1 à 4, **caractérisé en ce que** le revêtement non résistant à l'abrasion (22) s'étend sur toute la longueur axiale de la plage supérieure (18).

6. Piston selon une des revendications 1 à 5, **caractérisé en ce que** le piston présente une partie inférieure de piston et une partie supérieure de piston raccordée à la partie inférieure de piston, dans lequel le cordon de feu (18) est formé sur la partie supérieure de piston, qui est constituée en acier ou en fonte, notamment en fonte nodulaire.

7. Piston selon une des revendications 1 à 6, **caractérisé en ce qu'**il est refroidi par huile.

8. Cylindre (10) d'un moteur à combustion interne
comportant une chemise de cylindre (11), un évidement (20) dans la chemise de cylindre (11) recevant un anneau de feu (19)
avec un piston (12) qui peut être déplacé de haut en bas dans la chemise de cylindre (11),
**caractérisé en ce que**
le piston (12) est conçu selon une des revendications 1 à 7.

9. Moteur à combustion interne, comportant au moins un cylindre (10) selon la revendication 8.
